# EUROPEAN PATENT APPLICATION

(11) **EP 1 469 221 A1**
(43) Date of publication of application: **20.10.2004**
(21) Application number: 04251792.0
(22) Date of filing: 26.03.2004
(51) Int. Cl.: F16D 65/097, F16D 65/00

(54) **An anti-squeal shim structure and a disc brake apparatus comprising the same**

(30) Priority: 28.03.2003 JP 2003091935
(71) Applicant: NICHIAS CORPORATION, Tokyo (JP)
(72) Inventor: Niwa, Takahiro, Tokyo (JP); Yoshihara, Masaki, Yokohama-shi, Kanagawa-ken (JP); Kondoh, Junichi, Ikoma-gun, Nara-ken (JP); Arai, Tadashi, Ikoma-gun, Nara-ken (JP)
(74) Representative: Pluckrose, Anthony William

(57) **Abstract**

In order to provide a shim structure (A₁;A₄) capable of controlling the generation of a voltage by the difference in the standard electrode potentials specific to metals between an aluminum caliper and a metal plate, the shim structure (A₁;A₄) abutting against the backing plate (4) of a friction material (3), which forms a disc pad (B), is constituted by providing rubber layers (11) on both sides of an aluminum alloy plate (10). Since the aluminum alloy plate (10) is used for the metal plate constituting the shim structure (A₁;A₄), even when a steel caliper is replaced with the aluminum caliper, the generation of the voltage generated between metals is controlled to a lesser degree, thereby preventing corrosion of the caliper arising therefrom.

## Description

The present invention relates to a disc brake anti-squeal shim structure of an automobile, and more specifically, it relates to an anti-squeal shim structure, which reduces a high frequency noise (squeal phenomenon) generated at braking, and a disc brake apparatus comprising the same.

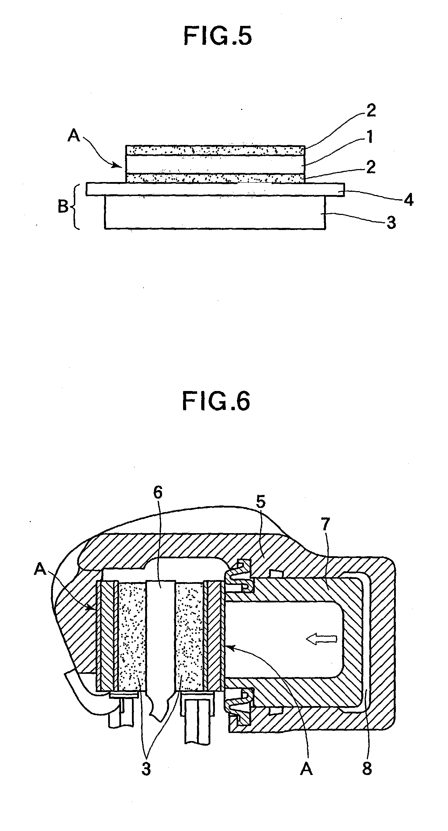

In general, as a conventional automobile disc brake anti-squeal shim structure, as shown in Fig. 5, a shim structure A comprised by providing thin rubber layers 2, 2 by rubber coating on both sides of a thin steel plate 1 such as a cold-reduced carbon steel sheets and the like has been used. In the drawing, reference numeral B denotes a disc pad, reference numeral 3 a friction material which forms the pad, and reference numeral 4 a backing plate (back metal) (for example, see Japanese Patent Application Laid-Open No. 7-71519).

Fig. 6 shows a construction of a conventional disc brake apparatus comprising the anti-squeal shim structure. In the drawing, reference numeral 5 denotes a caliper, reference numeral 6 a disc rotor, reference numeral 3 brake pads, reference numeral A a shim structure, reference numeral 7 a piston and reference numeral 8 a brake oil.

In recent years, weight saving to improve fuel economy has been required for parts used for an automobile, and in the case of a brake part, an aluminum caliper has come to be used instead of a steel caliper.

On the other hand, with regard to a brake shim portion, since the part itself is small in size and light in weight, is used, and a shim structure comprised by forming a rubber layer on a thin steel plate such as a cold-reduced carbon steel sheets and the like by coating is used.

However, when the shim structure comprising the rubber coated steel plate for the shim portion of a disc brake apparatus is used for the aluminum caliper, there has been a problem in that the aluminum caliper is easily corroded.

This is because, in the case that the shim is used for a long period of time, the surface rubber layer of the steel plate shim ends up being stripped off so that the aluminum caliper and the shim steel plate portion are brought into direct contact, thereby a micro voltage is generated between the aluminum caliper and the steel plate shim, and the aluminum caliper becoming a negative pole side is easily oxidized and corrosion such as rust and the like easily advances.

Moreover, even in the case where metals are not brought into direct contact, the above described phenomenon occurs as the same phenomenon when, for example, the contact is made through an electrolyte such as salt water and the like or a substance into which an electric current easily flows such as a conductive organic matter.

It is a well-known fact that, when heterogeneous metals are brought into contact directly or through the conductive organic matter in this way, a voltage is generated by a difference in the standard electrode potentials specific to respective metals.

Hence, the development of a brake shim structure, which does not cause the above-described problem, is needed.

It is a main object of the present invention to provide the shim structure in which the difference in the standard electrode potential with the aluminum caliper is small and the emergence of corrosion due to the difference in the electrode potential can be controlled, and a disc brake apparatus comprising the same.

The anti-squeal shim structure according to the present invention is a shim structure comprising a metal plate and a rubber layer provided at least on one side of the metal plate, and its gist is that an aluminum alloy plate is used for the metal plate.

The disc brake apparatus according to the present invention is constituted by a aluminum caliper, a disc brake portionmounted in the interior thereof and a anti-squeal shim structure, the anti-squeal shim structure comprising a metal plate and a rubber layer provided at least on one side of the metal plate, and its gist is that an aluminum alloy metal plate is used for the metal plate.

As for the types of the aluminum alloy plates used for the metal plate of the anti-squeal shim structure according to the present invention, there are available the numbers of the alloys as described in JIS such as: 1085, 1080, 1070, 1050, 1100, 1200, IN00, IN30, 2014, 2017, 2219, 2024, 3003, 3203, 3004, 3104, 3005, 3105, 5005, 5052, 5652, 5154, 5254, 5454, 5082, 5182, 5083, 5086, 5N01, 6061,7075, 7N01 and the like, and preferably those being excellent in corrosion resistance, heat resistance and strength such as 2014, 2017, 2219, 2024, 5005, 5052, 5652, 5154, 5254, 5454, 7075 and the like are desirable.

As for other elements used for the aluminum alloy plate, elements such as Si, Fe, Cu, Mn, Mg, Cr, Zn, Zr (Zr + Ti), Ga, V, Ti and the like as described mainly in the JIS chemical composition table of the numbers of the alloys are known.

On the other hand, as for the types of the rubbers to form the rubber layer, NBR, fluoride rubber, silicone rubber and the like are used. In this case, the addition of filler to the rubber can improve heat resistance and creep resistance.

Since, as compared with the conventional shim structure using the steel plate, the shim structure using the aluminum alloy plate as described above for the metal plate of the anti-squeal shim structure has little difference in the standard electrode potential with the aluminum caliper, corrosion due to the difference in the electrode potential such as described above can be controlled.

Note that, even when the aluminum plate is used for the metal plate, the difference in the standard electrode potential with the aluminum caliper can be reduced. However, it is hardly possible to provide the aluminum plate for actual use since it is poor in heat resistance (heat resistance against high temperature generated at braking) and compressive strength.

Preferred embodiments of the present invention will now be described by way of example only with reference to the accompanying drawings, in which:
Fig. 1 is a schematic sectional view of an anti-squeal shim structure showing one embodiment of the present invention;
Fig. 2 is a schematic sectional view of the anti-squeal shim structure showing another embodiment of the present invention;
Fig. 3 is a schematic sectional view of the anti-squeal shim structure showing another embodiment of the present invention;
Fig. 4 is a schematic sectional view of the anti-squeal shim structure showing another embodiment of the present invention;
Fig. 5 is a schematic sectional view of a conventional anti-squeal shim structure; and
Fig. 6 is a sectional view of a conventional disk brake apparatus.

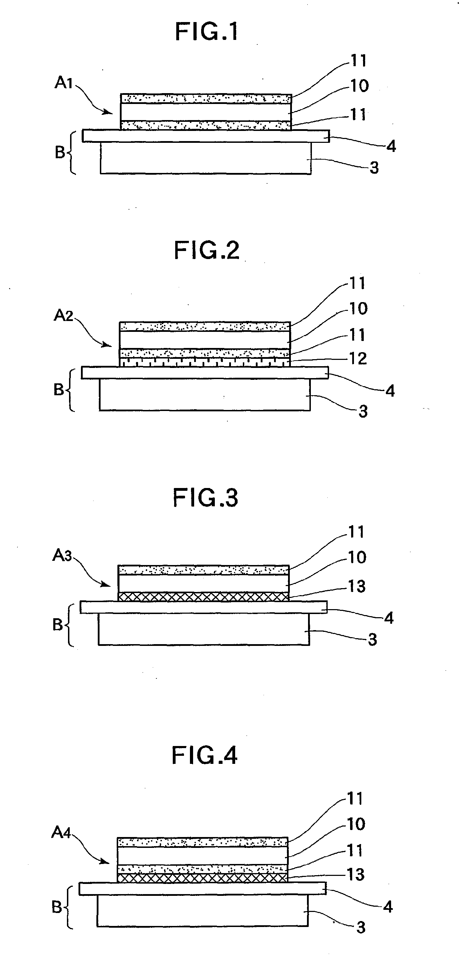

As for the preferred embodiment of the present invention, as shown in Fig. 1, a shim structure A₁ is constituted by providing rubber layers 11, 11 on both sides of an aluminum alloy plate 10. Note that, in the drawing, reference numeral B denotes a disc pad, reference numeral 3 a frictional material forming the pad and reference numeral 4 a backing plate (back metal).

The employment of the aluminum alloy plate 10 for the metal plate which constitutes a shim portion as described above makes it possible to replace the caliper of the disc brake apparatus with a lightweight aluminum type from a steel type so as to control the generation of the voltage due to the difference in the standard electrode potentials between heterogeneous metals.

The shim structure A₁ is shown in Fig. 1. This shim structure A₁ is, similarly with Fig. 5, directly mounted on the backing plate 4 of the disc pad B.

The shim structure A₁ uses the aluminum alloy plate 10 of the JIS alloy number 5052 as the metal plate and shows a structure in which rubber layers 11, 11 are provided on both sides of the alloy plate 10. The rubber layer uses NBR, fluoride rubber, silicone rubber and the like.

A shim structure A₂ of Fig. 2 shows a state in which the same rubber layers 11, 11 are provided onboth sides of the aluminum alloy plate 10 same as Fig. 1 and a lubricant layer 12 is allowed to be interposed between the backing plate 4 of the disc pad B and the downside rubber layer 11.

A shim structure A₃ of Fig. 3 shows a constitution in which the same rubber layer 11 is provided on one side only of the aluminum alloy plate 10 same as Fig. 1 and a bonding layer 13 is provided on the surface having no rubber layer and this bonding layer 13 serves as an adhesive portion to the backing plate 4.

A material used for the bonding layer 13 is an adhesive or a bonding agent, and as for the types of the adhesive, there are available those such as acrylic, urethane system, silicone system and the like.

As for the bonding agents, there are available those such as thermosetting resin system, thermoplastic resin system, elastomer system, hotmelt system and the like.

The shim structure of Fig. 3 has the bonding layer 13 held between the backing plate 4 of the disc pad and the aluminum alloy plate 10 to form a damping structure of a restrictive type and, therefore, is excellent in a brake squeal prevention.

A shim structure A₄ of Fig. 4 shows a constitution in which the same rubber layers 11, 11 are provided on both sides of the aluminum alloy plate 10 same as Fig. 1 and the bonding layer 13 is provided on the surface of the downside rubber layer 11 so as to allow this layer to serve as the adhesive portion of the disc pad to the backing plate 4.

The shim structure A₄ of Fig. 4 has the downside rubber layer 11 and the bonding layer 13 held between the backing plate 4 and the aluminum alloy metal 10 to form the damping structure of the restrictive type. In this case, a damping action of a wide frequency range comes into play, and comparing to the shim structure of Fig. 3, a better brake squeal prevention can be obtained.

### Confirmation of Effects

### [Corrosion Resistance Evaluation]

A salt water spray test (500 hours) is conducted under the circumstance in which parts of the rubber layers of the conventional shim structure (Fig. 5) and the rubber layers of the shim structures according to the present invention as shown in Figs. 1, 3 and 4 are removed, and the rubber removed faces and the aluminum plates of respective shim portions are put into a state of being brought into face contact, thereby comparing a corrosion degree of the aluminum plates. The result is shown in Table 1.

**[Table 1]**

| Anti-squeal shim structure | After 24 hours |
|---|---|
| Fig. 5 | Emergence of much white rust |
| Fig. 1 | Emergence of white rust |
| Fig. 3 | Emergence of white rust |
| Fig. 4 | Emergence of white rust |

As shown in Table 1, it was clearly recognized that aluminum corrosion is smaller for the shim structures shown in Figs. 1, 3 and 4.

### [Anti-Squeal Characteristics]

### Squeal Generation Rate Measurement

For measurement, a brake squeal dynamo testing machine was used because various braking conditions can be realized to approximate brake squeals generated at an actual vehicle. The disc pad and the rotor in which the squeals are easily generated as well as the test shim (Fig. 1) which completed the above-described salt water spray test or the test shim (Fig. 5) were built into the machine, and tires were rotated at 50 km/hr. Meanwhile, the temperature of the brake pad was changed within the range of 50 to 250°C and, by corresponding to the temperature of the moment, a brake oil pressure was changed within the range of 0.2 to 3.5 MPa so as to apply the brake. When a squeal was generated, it was regarded as a first generation time. The brake was applied 2, 688 times in total and the total number of squeal generation times was divided by brake times (2,688 times) to figure out the squeal generation rate. In addition, for a purpose of comparison, the test shim immediately after its manufacture (Fig. 1) and the test shim (Fig. 5) was also measured in like manner in respect of the squeal generation rate.

Moreover, for the test, a total of four types of shims comprising: (1) a salt water spray unprocessed type as well as (2) a 500 hours processed type of the conventional brake shim (see Fig. 5), and (3) the salt water spray unprocessed type as well as (4) the 500 hours processed type of the brake shim of the shim structure of Fig. 1 were used.

The result is shown in the following Table 2, in which the squeal generation rate is increased sharply after the salt water spray test was conducted on the test shim (Fig. 5), and the lowering of the squeal prevention effect due to rust generated is found. In contrast to this, the test shim (Fig. 1) according to the present invention does not increase the squeal generation rate even after the salt water spray test is conducted, and maintains the squeal prevention effect.

**[Table 2]**

| Squeal Generation Rate Measurement Result | | |
|---|---|---|
| | | Squeal generation rate |
| Test shim Fig. 1 | Before salt water spray test | 20% |
| | After salt water spray test | 22% |
| Test shim Fig. 5 | Before salt water spray test | 21% |
| | After salt water spray test | 60% |

As described above, according to the present invention, since the aluminum alloy plate is used for the metal plate of the anti-squeal shim structure comprising the metal plate and the rubber layer, it is possible to replace the caliper constituting the conventional disc brake apparatus with the lightweight aluminum type from the steel type and control the emergence of corrosion due to the difference in the electrode potential with the conventional steel caliper.

Moreover, the employment of the aluminum caliper can contribute to reduce the weight of the disc brake apparatus.

## Claims

1. An anti-squeal shim structure (A₁;A₄) comprising: a metal plate (10), a rubber layer (11) provided at least on one side of the metal plate (10) , wherein an aluminum alloy plate is used for said metal plate (10).

2. A disc brake apparatus comprising: an aluminum caliper, a disc brake portion mounted in the interior thereof, a anti-squeal shim structure (A₁;A₄), wherein said anti-squeal shim structure (A₁;A₄) comprises a metal plate (10), a rubber layer (11) provided at least on one side of the metal plate (10) , an aluminum alloy plate is used for said metal plate (10).
